# EUROPÄISCHE PATENTSCHRIFT

(11) **EP 3 159 231 B1**
(45) Veröffentlichungstag und Bekanntmachung des Hinweises auf die Patenterteilung: **31.01.2018**
(21) Anmeldenummer: 16001980.8
(22) Anmeldetag: 12.09.2016
(51) Int. Cl.: B60T 17/00

(54) **VORRICHTUNG ZUR LÖSBAREN BEFESTIGUNG EINER TROCKENMITTELPATRONE AN EINEM GEHÄUSE EINER DRUCKLUFTAUFBEREITUNGSANLAGE EINES FAHRZEUGS**
DEVICE FOR REMOVABLY ATTACHING A DESICCANT CARTRIDGE TO A HOUSING OF A COMPRESSED AIR TREATMENT SYSTEM OF A VEHICLE
DISPOSITIF DE FIXATION AMOVIBLE D'UNE CARTOUCHE D'AGENT SICCATIF SUR UN BOITIER D'UNE INSTALLATION DE TRAITEMENT D'AIR COMPRIME D'UN VEHICULE AUTOMOBILE

(30) Priorität: 16.10.2015 DE 102015013493
(43) Veröffentlichungstag der Anmeldung: 26.04.2017
(73) Patentinhaber: MAN Truck & Bus AG, 80995 München (DE)
(72) Erfinder: Kaupert, Oliver, 80995 München (DE); Kolland, Wolfgang, 81245 München (DE); Haslberger, Georg, 84437 Reichertsheim (DE); Hofstetter, Thomas, 84048 Mainburg (DE)
(74) Vertreter: v. Bezold & Partner Patentanwälte - PartG mbB

(56) Entgegenhaltungen:
- EP-A2- 2 465 597
- DE-A1-102006 037 311
- JP-U- S6 191 321
- JP-U- H03 115 028
- JP-U- S63 118 926
- JP-U- S63 118 927
- TW-A- 200 510 194
- US-A1- 2015 258 492

## Beschreibung

Die Erfindung betrifft eine Vorrichtung zur lösbaren Befestigung einer Trockenmittelpatrone an einem Gehäuse einer Druckluftaufbereitungsanlage eines Fahrzeugs, insbesondere eines Nutzfahrzeugs.

Druckluftsysteme - insbesondere in Nutzfahrzeugen - benötigen nachgeschaltet zum Luftpresser eine sogenannte Luftaufbereitungsanlage. Darin wird die Luft u. a. getrocknet und gefiltert, und es werden Ölbestandteile abgeschieden. Diese Vorgänge finden alle in einer sogenannten Trockenmittelpatrone statt, die, grob gesagt, aus einer Bodenplatte mit Öffnungen zur Durchströmung der Luft und einem becher- oder topfförmigen Deckel besteht, die fest miteinander verbunden sind. Darin befindet sich ein feuchtigkeitsadsorbierendes Granulat, das der durchströmenden Luft die Feuchtigkeit entzieht. Dieses Granulat hat beim Einsatz im Nutzfahrzeug nur eine begrenzte Lebensdauer. Ein Grund hierfür ist, dass sich der in der Druckluft enthaltene Ölnebel auf dem Granulat absetzt und so die für die Feuchtigkeitsaufnahme effektive Oberfläche reduziert. Ferner kann sich das Granulat durch die Rüttelbeanspruchung mechanisch zersetzen. Die Trockenmittelpatrone muss daher regelmäßig getauscht werden.

Typischerweise ist dafür die Patrone mit einem Mutterngewinde in der Bodenplatte versehen. So lässt sich die verbrauchte Patrone ab- und eine neue Patrone auf ein Außengewinde am Gehäuse der Druckluftaufbereitungsanlage, z. B. am Lufttrocknergehäuse, aufschrauben. Meist wird ein Vierkantdichtring verwendet, der durch die Verschraubung axial verpresst wird, so abdichtet und gleichzeitig die axiale Verspannung der Verschraubung sicherstellt. Derartige Trockenmittelpatronen sind beispielsweise aus den Offenlegungsschriften DE 10 2013 103 066 A1, DE 10 2012 105 137 A1, EP2 465 597 A2 sowie der DE 10 2007 034 435 A1 bekannt.

Abhängig vom Einbauort der Druckluftaufbereitungsanlage ist oft die Zugänglichkeit der Patrone beim Wechsel eingeschränkt. Die Patrone ist immer oben auf dem Gehäuse der Druckluftaufbereitungsanlage befestigt, deswegen wäre die optimale Zugangsrichtung für den Patronentausch von oben. Diese Freigängigkeit ist aber nicht immer gegeben, bedingt durch Aufbauten bei LKWs oder generell bei Bussen. Außerdem wird oft von unten her gearbeitet, wenn das Fahrzeug in der Werkstatt auf der Grube steht.

Es gibt heute teilweise sehr festsitzende Patronen, bei denen die vorgegebenen Servicezeiten für den Patronentausch in der Werkstatt nicht eingehalten werden können. Man benötigt ein sehr hohes Lösemoment, welches trotz Hilfsmittel, wie z. B. einem Spanngurt mit einem langen Hebel, schwer aufgebracht werden kann, weil der seitliche Freiraum für den Einsatz eines Hebels nicht gegeben ist.

Weil sich das Dichtelement, typischerweise ein Vierkantdichtring, bei den aus der Praxis bekannten Befestigungen zwischen Patronenbodenplatte und Gehäuse der Druckluftaufbereitungseinheit beim Verschrauben mitdrehen muss, kommt es zu großen Schwankungen durch unterschiedliche Reibungseinflüsse beim Anzugsmoment und zur Beschädigung oder zum Verdrehen des Dichtelements, was wiederum Leckagen zur Folge hat. Außerdem muss die axiale Verspannung der Verschraubung durch die Dichtung erzeugt werden.

Es ist somit eine Aufgabe der Erfindung, eine verbesserte Möglichkeit bereitzustellen, um eine Trockenmittelpatrone an einem Gehäuse einer Luftaufbereitungsanlage lösbar befestigen zu können, mit der Nachteile herkömmlicher Techniken vermieden werden können. Die Aufgabe der Erfindung ist es insbesondere, eine Befestigungsschnittstelle für eine Trockenmittelpatrone bereitzustellen, mittels derer die Patrone an einem Gehäuse der Luftaufbereitungsanlage, z. B. des Lufttrockners, befestigt und sicher und zuverlässig mit konstantem Kraftaufwand wieder gelöst werden kann.

Diese Aufgaben werden durch eine Vorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Vorrichtung zur lösbaren Befestigung einer Trockenmittelpatrone an einem Gehäuse einer Druckluftaufbereitungsanlage bzw. Lufttrocknungsanlage eines Fahrzeugs bereitgestellt. Die Vorrichtung stellt eine Schnittstelle bereit, um die Trockenmittelpatrone lösbar am Gehäuse zu befestigen. Das Gehäuse kann beispielsweise ein Gehäuse des Lufttrockners sein. Die Druckluftaufbereitungsanlage kann für eine Druckluftbremsanlage eines Fahrzeugs vorgesehen sein. Das Fahrzeug kann ein Nutzfahrzeug sein.

Die Trockenmittelpatrone, auch als Trocknungspatrone bezeichnet, umfasst in an sich bekannter Weise ein Patronengehäuse, in dem ein Trockenmittelbehälter gehaltert ist. Das Patronengehäuse hat einen Deckel, welcher das Patronengehäuse nach oben begrenzt und typischerweise becher- oder topfförmig ist, und ein Trägerelement, welches das Patronengehäuse nach unten begrenzt. Das Trägerelement ist in Montageposition am Gehäuseabschnitt der Druckluftaufbereitungsanlage lösbar befestigt und wird nachfolgend auch als Patronenboden bezeichnet. Der Patronenboden umfasst ein Bördelblech (auch als Bördelplatte bezeichnet), um den Patronenboden am Patronendeckel durch eine Bördelung zu befestigen. Der am Patronenboden umlaufende Bereich, an dem der Patronenboden mit dem Patronendeckel verbördelt ist, bildet den sogenannten Patronenfalz, nachfolgend auch als Verbindungsfalz bezeichnet.

Erfindungsgemäß wird eine Befestigungsvorrichtung vorgeschlagen, die ohne die herkömmliche zentrale Verschraubung, bei der das Patronengehäuse an einem die Trockenmittelpatrone axialmittig durchsetzenden Außengewinde des Gehäuseabschnitts verschraubt wird, auskommt.

Stattdessen sieht die Erfindung vor, dass in die Bördelung zwischen Patronengehäusedeckel und Bodenblech mindestens ein drittes Blech, nachfolgend auch als Befestigungsblech oder Blechlasche bezeichnet, eingebracht ist. Dieses Befestigungsblech ist ein Blechstück, das einen ersten Abschnitt aufweist, der mit einem Endbereich eines Bördelblechs eines Patronenbodens und einem Endbereich eines Patronendeckels zu dem Patronenfalz verbördelt ist, und einen zweiten Abschnitt aufweist, der vom Verbindungsfalz nach außen absteht und somit nicht in den Patronenfalz mit eingebördelt ist. Der nach außen abstehende Teil steht vorzugsweise radial nach außen ab.

Die Radialrichtung liegt in der Ebene der Bodenplatte der Trockenmittelpatrone, d. h., die möglichen Radialrichtungen werden durch die Ebene der Bodenplatte der Trockenmittelpatrone aufgespannt. Die Radialrichtung ist ferner senkrecht zur Axialrichtung, wobei die Axialrichtung der Richtung der senkrecht auf dem Patronenboden stehenden Zentralachse der Trockenmittelpatrone entspricht.

Der nach außen abstehende Teil des Befestigungsblechs kann zur Befestigung der Trockenmittelpatrone am Gehäuse der Druckluftaufbereitungsanlage genutzt werden, beispielsweise indem dieser am Gehäuse der Druckluftaufbereitungsanlage verschraubt wird oder durch Ausbildung einer Steckverbindung zur axialen Sicherung der Trockenmittelpatrone.

Durch den Entfall der zentralen Verschraubung ergeben sich folgende Vorteile im Betrieb: Aufgrund des fehlenden Gewindes erfolgt keine Spanbildung beim Auffädeln der Patrone. Die durch die Verschraubung sonst mögliche Beschädigung des Dichtelements wird vermieden, so dass das Auftreten von Leckagen und Fehlfunktionen im Druckluft- und insbesondere Bremssystem durch Fremdpartikel, die beim Patronentausch eingetragen wurden, vermieden werden kann. Ferner kann eine größere Servicefreundlichkeit beim Patronentausch erzielt werden. Ein Grund hierfür ist, dass ein zwischen Patronenboden und Gehäuse der Druckluftaufbereitungsanlage angeordnetes Dichtelement, z. B. ein Vierkantdichtring, sich bei der Montage der Patrone nicht mitdrehen muss, so dass Schwankungen durch unterschiedliche Reibungseinflüsse beim Anzugsmoment, Beschädigungen oder Verdrehen des Dichtelements vermieden werden können. Ferner kann die Schmierung des Dichtelements damit ebenfalls entfallen. Dadurch können chemische Schäden der Dichtung bedingt durch die Verwendung falscher Schmierstoffe vermieden werden. Ein weiterer Vorteil ist, dass durch den Entfall des zentralen Gewindes die Bodenplatte nicht mehr so massiv ausfallen muss und so eine Gewichtseinsparung von ca. 0,5 kg bei der Patrone erzielt werden kann. Ferner kann die Patrone frei drehbar aufs Gehäuse aufgesetzt werden. Damit kann künftig auch gewährleistet werden, dass eine Beschriftung, z. B. ein Markenlogo, und/oder Betriebsangaben auf der Patrone immer in die gleiche Richtung orientiert sind, beispielsweise zur Fahrzeugaußenseite, wo sie gut sichtbar sind. Das kann mit der bisher verschraubten Patrone nicht sichergestellt werden.

Das Einarbeiten einer zusätzlichen Blechlasche in den Patronenfalz ist ferner herstellungstechnisch einfach und mit geringem Materialmehraufwand umsetzbar.

Gemäß einer bevorzugten Ausführungsform weist der zweite Abschnitt des Befestigungsblechs mindestens ein Durchgangsloch auf, durch welches ein stiftförmiges Befestigungselement, insbesondere eine Schraube oder ein Bolzen, führbar oder geführt ist, um die Trockenmittelpatrone lösbar am Gehäuse der Druckluftaufbereitungsanlage zu befestigen und/oder um die Trockenmittelpatrone lösbar in einem bestimmten Drehwinkel zum Gehäuse festzulegen. Dadurch kann eine sichere Befestigung am Gehäuse erzielt werden. Das Gehäuse der Luftaufbereitungsanlage weist in Montageposition der Trockenmittelpatrone eine zum Durchgangsloch fluchtende Öffnung zur Aufnahme des stiftförmigen Befestigungselements auf. Bei mehreren Durchgangslöchern sind entsprechend mehrere fluchtende Öffnungen am Gehäuse angeordnet.

Zur Erhöhung der Verdrehsicherheit ist es vorteilhaft, mindestens zwei Durchgangslöcher am zweiten Abschnitt vorzusehen. Das mindestens eine Durchgangsloch kann beispielsweise ein Rundloch sein. Das mindestens eine Durchgangsloch kann auch ein nach außen offenes Langloch sein, so dass der zweite Abschnitt unter einem stiftförmigen Befesti-gungselement, das bereits in der korrespondierenden Öffnung im Gehäuse steckt, jedoch noch nicht festgezogen ist, eingefädelt werden kann. Ein weiterer Vorteil der Ausführung als Langloch ist, dass es gleichzeitig als Einführhilfe und zur anschließenden Fixierung dienen kann.

Eine weitere vorteilhafte Möglichkeit der erfindungsgemäßen Realisierung sieht vor, dass am Gehäuse der Luftaufbereitungsanlage eine Einstecköffnung, z. B. eine Einstecktasche, vorhanden ist, in die der zweite Abschnitt einsteckbar, vorzugsweise in Radialrichtung einsteckbar ist. Auf hier dient der nach außen abstehende Abschnitt der Blechlasche wiederum als Einführhilfe beim seitlichen Einfädeln der Trockenmittelpatrone. Auf diese Weise kann die Patrone mittels einer Steckverbindung montiert und axial gesichert werden.

Eine weitere Ausführungsvariante sieht vor, dass am zweiten Abschnitt ein mechanischer Schnellverschluss, beispielsweise ein Kofferschloss oder Schnappverschluss, angeordnet ist.

Eine besonders vorteilhafte Ausführungsform der Vorrichtung sieht vor, dass zwei Befestigungsbleche vorgesehen sind, die vorzugsweise umfangsseitig diametral am Verbindungsfalz angeordnet sind. Dies ermöglicht einen besonders festen Sitz der mittels der Befestigungsbleche montierten Trockenmittelpatrone.

Bei einer vorteilhaften Variante dieser Ausgestaltungsform weist der zweite Abschnitt eines ersten der beiden Befestigungsbleche mindestens ein Rundloch auf. Der zweite Abschnitt des zweiten der beiden Befestigungsbleche weist mindestens ein nach außen offenes Langloch auf, das gleichzeitig als Einführhilfe dienen kann. Alternativ kann am Gehäuse eine Einstecköffnung und/oder Einstecktasche vorhanden sein, in die der zweite Abschnitt des zweiten der beiden Befestigungsbleche in radialer Richtung einsteckbar ist. Bei dieser Variante kann der zweite Abschnitt des zweiten Befestigungsbleches keine Durchgangslöcher aufweisen.

Mit der vorliegenden Erfindung kann somit eine Trockenmittelpatrone bereitgestellt werden, die kein Gewinde, insbesondere kein am Patronenboden axialmittig angeordnetes Gewinde, aufweist, um die Patrone am Gehäuse der Luftaufbereitungsanlage zu verschrauben.

Die Erfindung betrifft ferner eine Trockenmittelpatrone mit einem Befestigungsblech wie in diesem Dokument offenbart sowie ein Kraftfahrzeug, insbesondere ein Nutzfahrzeug, mit einer Vorrichtung wie in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Detailansicht im Schnitt einer Vorrichtung gemäß einem Ausführungsbeispiel der Erfindung;
- Figuren 2A und 2B: jeweils eine Draufsicht auf eine Trockenmittelpatrone mit einer eingebördelten Blechlasche gemäß weiteren Ausführungsbeispielen der Erfindung;
- Figuren 3A bis 3D: eine Montage der Trockenmittelpatrone mittels einer Vorrichtung gemäß einem weiteren Ausführungsbeispiel der Erfindung; und
- Figur 4A bis 4D: eine Montage der Trockenmittelpatrone mittels einer Vorrichtung gemäß einem weiteren Ausführungsbeispiel der Erfindung.

Gleiche Elemente sind in allen Figuren mit denselben Bezugszeichen bezeichnet.

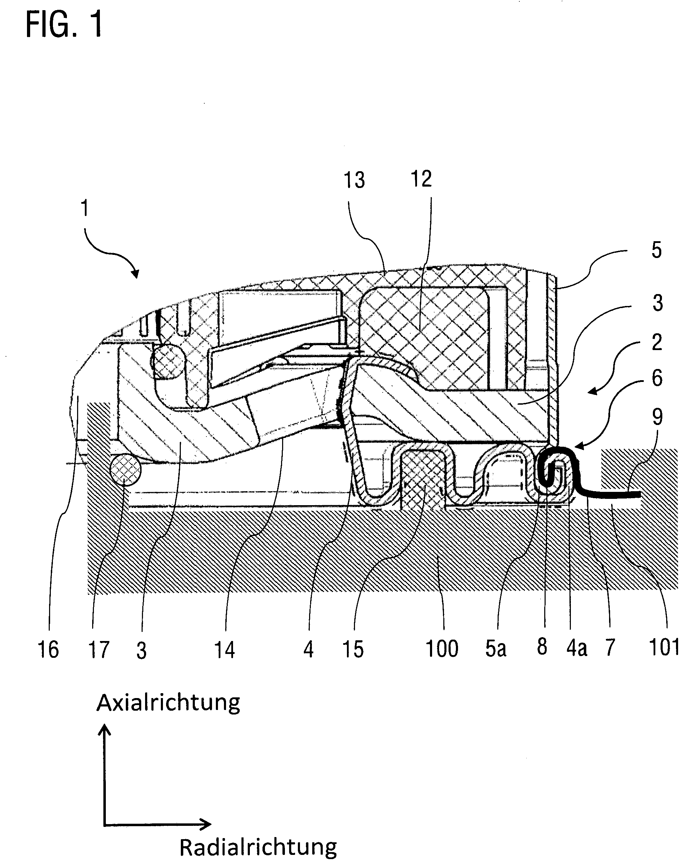

Figur 1 zeigt hierbei eine Detailansicht im Schnitt einer Trockenmittelpatrone gemäß einem Ausführungsbeispiel der Erfindung. Figur 1 zeigt insbesondere einen Ausschnitt eines radial außenliegenden unteren Bereichs einer Trockenmittelpatrone 1. Der innere Aufbau der Trockenmittelpatrone 1 kann in an sich bekannter Weise ausgeführt sein, beispielsweise wie in den Offenlegungsschriften DE 10 2013 103 066 A1, DE 10 2012 105 137 A1 sowie der DE 10 2007 034 435 A1 beschrieben. Mit dem Bezugszeichen 13b ist z. B. der durch ein Vlies gebildete Ölfilter bezeichnet und mit dem Bezugszeichen 13 der Innenbehälter für das Trockenmittel, von dem nur ein kleiner Teil sichtbar ist.

Das Patronengehäuse der Trockenmittelpatrone hat in an sich bekannter Weise einen topf- oder becherförmigen Deckel 5, welcher das Patronengehäuse nach oben begrenzt, und einen Patronenboden 2, welches das Patronengehäuse nach unten begrenzt. Der vertikale Pfeil in Figur 1 gibt die Axialrichtung der Trockenmittelpatrone an, der horizontale Pfeil die Radialrichtung der Trockenmittelpatrone.

Der Patronenboden ist ebenfalls, wie in den Offenlegungsschriften DE 10 2013 103 066 A1, DE 10 2012 105 137 A1 sowie der DE 10 2007 034 435 A1 beschrieben, aus einer Trägerplatte 3 und einem Bördelblech 4 gebildet, wobei die Befestigung zwischen Trägerplatte 3 und dem topfförmigen Außendeckel 5 der Trockenmittelpatrone über das Bördelblech 4 erfolgt, indem der Außendeckel 5 und das Bördelblech 4 miteinander verbördelt werden und dadurch den umlaufenden Verbindungsfalz bzw. Patronenfalz 6 ausbilden. Das Trägerelement weist eine zentrale Ausströmöffnung 16 auf, über die die getrocknete und gereinigte Luft die Trockenmittelpatrone verlässt. Ferner ist in Figur 1 die Lufteinströmöffnung 14 in der Trägerplatte 3 erkennbar. Ferner ist ein Dichtring 15 in einer Dichtungsnut angeordnet, der zur Abdichtung des Patronengehäuses gegenüber dem Gehäuse der Luftaufbereitungsanlage im montierten Zustand dient. Die Dichtungsnut ist durch eine Bördelung des Bördelblechs 4 geformt. Der Dichtring kann auch in einer Dichtungsnut des Gehäuses der Druckluftaufbereitungsanlage angeordnet sein. Ein weiteres Dichtelement 17 umgibt am Patronenboden 3 die Ausströmöffnung 16, um eine Abdichtung zwischen der ungefilterten Luft außen und der gereinigten Luft aus dem Innern der Trockenmittelpatrone auszubilden.

Die Besonderheit dieser Ausführungsvariante liegt einerseits darin, dass in die Bördelung zwischen Patronengehäusedeckel 5 und Bodenblech mindestens ein weiteres flächiges Blechstück 7 (Befestigungsblech) eingebracht ist. Lediglich zur Hervorhebung des Blechstücks 7 ist dieses durch die durchgehend schwarze Linie dargestellt und nicht in der Schraffur der Schnittdarstellung. Dieses Blechstück 7 ist mit einem ersten Abschnitt 8 mit dem Endbereich 4a des Bördelblechs 4 und dem Endbereich 5a des Patronengehäusedeckels 5 zu dem Patronenfalz 6 verbördelt. Ein zweiter Abschnitt 9 des Blechstücks steht vom Patronenfalz 6 radial nach außen ab und ist somit nicht in den Patronenfalz 6 mit eingebördelt.

Der nach außen abstehende zweite Abschnitt 9 kann verschiedene Funktionen übernehmen. In dem in Figur 1 gezeigten Ausführungsbeispiel ist beispielsweise am Gehäuse 100 des Lufttrockners eine entsprechende Einstecköffnung 101 vorgesehen, in die der nach außen abstehende zweite Abschnitt 9 radial, d. h. in Radialrichtung, eingesteckt werden kann, wodurch er die Trockenmittelpatrone 1 in Axialrichtung durch Formschluss sichert.

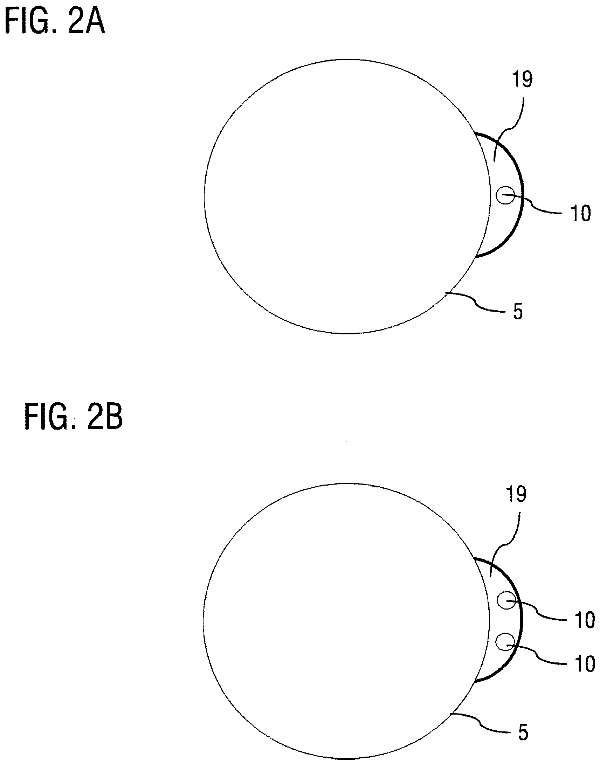

Figur 2A zeigt eine Draufsicht auf eine Trockenmittelpatrone mit einer eingebördelten Blechlasche gemäß einem weiteren Ausführungsbeispiel der Erfindung. Von der eingebördelten Blechlasche ist nur der in Radialrichtung nach außen abstehende Abschnitt 19 gezeichnet. Der vorstehend beschriebene erste Abschnitt, der in den Patronenfalz eingebördelt ist, ist in der Draufsicht nicht sichtbar. Der nach außen abstehende Abschnitt 19 ist sichelförmig und weist eine mittige Durchgangsloch 10 auf. In der in Figur 2B gezeigten Variante sind zwei Durchgangslöcher 10 in dem nach außen abstehenden Abschnitt 19 der Blechlasche eingebracht.

In die Durchgangslöcher 10 kann ein stiftförmiges Befestigungselement, z. B. eine Schraube oder ein Bolzen, geführt sein, um die Trockenmittelpatrone lösbar am Gehäuse der Druckluftaufbereitungsanlage zu befestigen.

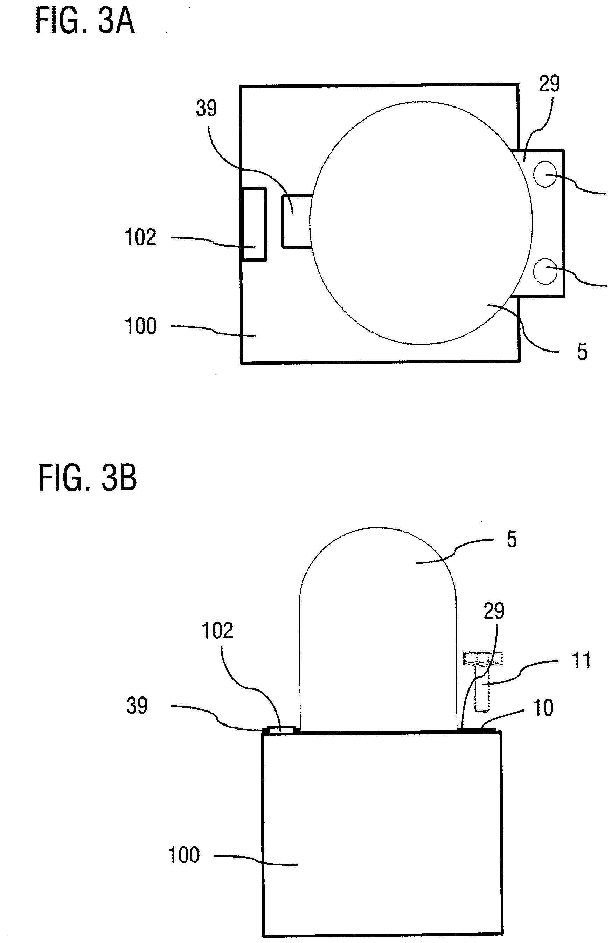

Dies ist beispielsweise in den Figuren 3A bis 3D gezeigt. Figur 3A zeigt wiederum eine Draufsicht auf eine Trockenmittelpatrone gemäß einem Ausführungsbeispiel der Erfindung. In den Patronenfalz sind nun umfangsseitig auf gegenüberliegenden Seiten zwei Blechlaschen eingearbeitet, von denen wiederum nur jeweils die nach außen abstehenden zweiten Abschnitte 29 und 39 gezeigt sind.

Der zweite Abschnitt 29 des auf der rechten Seite eingearbeiteten Blechstücks weist wiederum zwei Durchgangslöcher 10 auf, unterscheidet sich von dem in Figur 2B gezeigten zweiten Abschnitt 19 lediglich in der Form, die nun rechteckförmig ist.

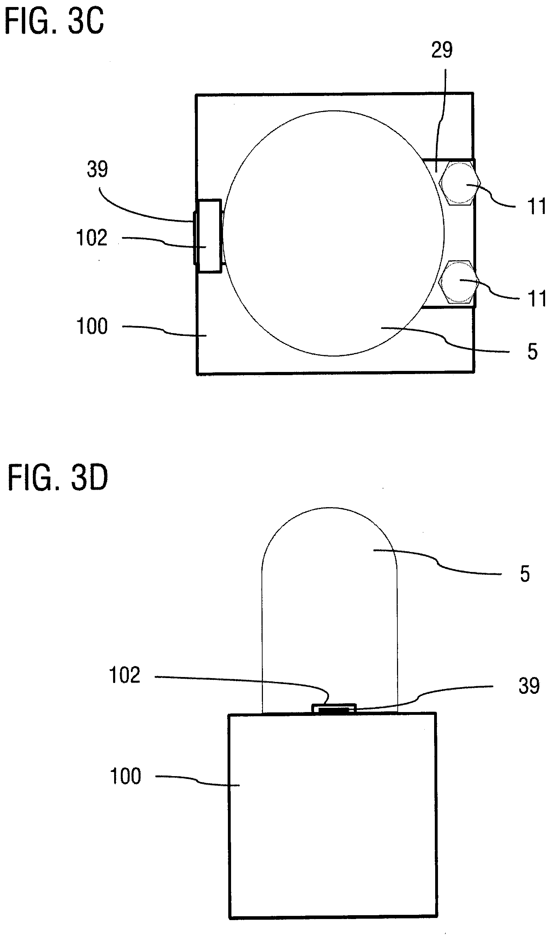

Der zweite Abschnitt 39 des auf der linken Seite eingearbeiteten Blechstücks ist schmäler ausgeführt und weist keine Durchgangslöcher auf. An der Oberseite des Gehäuses 100 der Druckluftaufbereitungsanlage ist durch eine Einstecktasche, insbesondere einen Bügel 102, eine entsprechende Einstecköffnung ausgebildet, in die der zweite Abschnitt 39 in Radialrichtung eingesteckt werden kann. Die Figuren 3B bzw. 3C bzw. 3D zeigen eine Vorderansicht bzw. eine Draufsicht bzw. eine Seitenansicht eines Zustandes, bei dem der rechte zweite Abschnitt 39 in die Einstecköffnung des Bügels 102 eingesteckt ist.

In diesem Zustand kann dann die Trockenmittelpatrone durch eine Verschraubung der linken Blechlasche zusätzlich gesichert werden. Hierfür wird in die Durchgangslöcher 10 jeweils eine Schraube 11 gesteckt. Das Gehäuse 100 der Druckluftaufbereitungsanlage weist in Montageposition der Trockenmittelpatrone eine zu jedem Durchgangsloch 10 fluchtende Öffnung (nicht gezeigt) zur Aufnahme der Schraube 11 auf. Figur 3B illustriert das Einführen der Schraube 11. Figur 3C zeigt die Trockenmittelpatrone im verschraubten Zustand des zweiten Abschnitts 29 der Blechlasche.

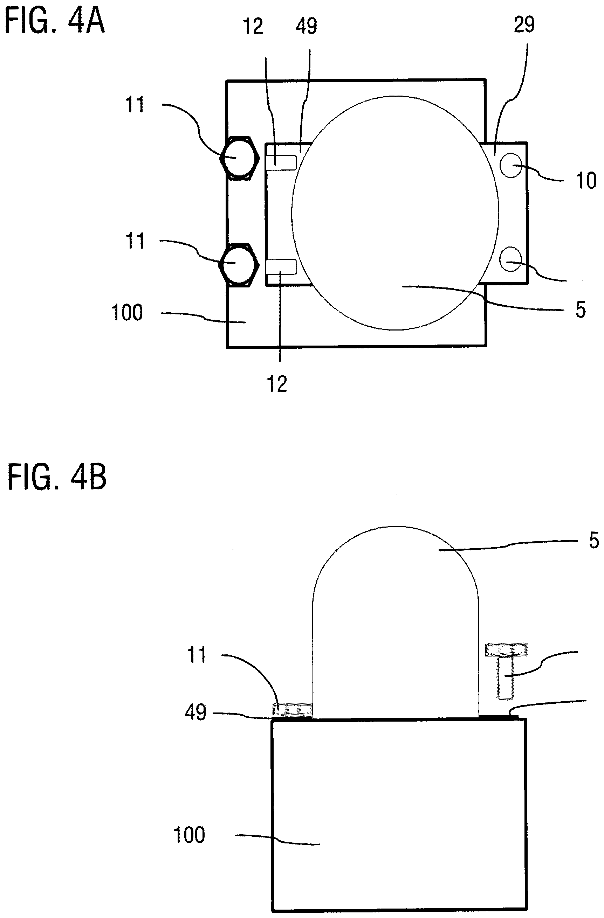

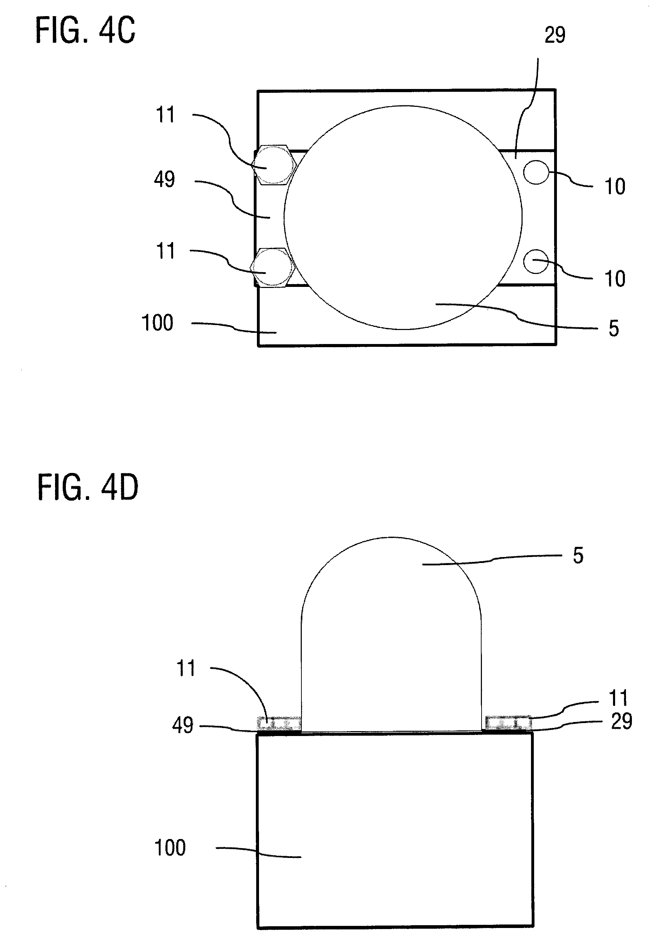

Die Figuren 4A und 4D illustrieren die Montage der Trockenmittelpatrone gemäß einem weiteren Ausführungsbeispiel. Bei dieser Variante ist auf gegenüberliegenden Seiten der Trockenmittelpatrone wiederum jeweils ein Blechstück zusätzlich in den Verbindungsfalz eingebördelt, mit jeweils einem radial nach außen abstehenden zweiten Abschnitt 29, 49. Der zweite Abschnitt 29 entspricht dem in den Figuren 3A bis 3D gezeigten zweiten Abschnitt und weist zwei Rundlöcher 10 auf. Der zweite Abschnitt 49 des anderen Blechstücks weist dagegen zwei nach außen offene Langlöcher 12 auf. Diese Langlöcher 12 dienen gleichzeitig als Einführhilfe, um den zweiten Abschnitt 49 unter einem stiftförmigen Befestigungselement 11, z. B. einer Schraube 11, das bereits in der korrespondierenden Öffnung im Gehäuse steckt, jedoch noch nicht festgezogen ist, einzufädeln. Figur 4A und Figur 4C illustrieren dies wiederum in einer Draufsicht. Figur 4B zeigt eine Vorderansicht im noch nicht verschraubten Zustand des zweiten Abschnitts 29 der Blechlasche. Figur 4D zeigt den verschraubten Zustand.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Trockenmittelpatrone
- 2: Patronenboden
- 3: Trägerplatte
- 4: Bördelblech
- 4a: Endbereich des Bördelblechs
- 5: Patronenaußendeckel
- 5a: Unterer Endbereich des Patronenaußendeckels
- 6: Verbindungsfalz, insbesondere Patronenfalz
- 7: Befestigungsblech, insbesondere Blechstück
- 8: Erster Abschnitt
- 9, 19, 29, 39, 49: Zweiter Abschnitt
- 10: Durchgangsloch
- 11: Stiftförmiges Befestigungselement, z. B. Schraube
- 12: Durchgangsloch, insbesondere Langloch
- 13: Trockenmittelbehälter
- 13b: Ölfilter
- 14: Einströmöffnung
- 15: Dichtring
- 16: Ausströmöffnung
- 17: Dichtelement
- 100: Gehäuse
- 101: Einstecköffnung
- 102: Einstecktasche, insbesondere Bügel

## Patentansprüche

1. Vorrichtung zur lösbaren Befestigung einer Trockenmittelpatrone (1) an einem Gehäuse (100) einer Druckluftaufbereitungsanlage eines Fahrzeugs, insbesondere eines Nutzfahrzeugs, **gekennzeichnet durch,**
mindestens ein Befestigungsblech (7), aufweisend einen ersten Abschnitt (8), der mit einem Endbereich (4a) eines Bördelblechs (4) eines Patronenbodens (2) und einem Endbereich (5a) eines Patronendeckels (5) zu einem Verbindungsfalz (6) verbördelt ist, und einen zweiten Abschnitt (9; 29; 39; 49), der vom Verbindungsfalz (6) nach außen absteht.

2. Vorrichtung nach Anspruch 1, **dadurch gekennzeichnet, dass** der zweite Abschnitt (19) des Befestigungsblechs (7) mindestens ein Durchgangsloch (10; 12) aufweist, durch welches ein stiftförmiges Befestigungselement (11), insbesondere eine Schraube oder ein Bolzen, geführt ist, um die Trockenmittelpatrone (1) lösbar am Gehäuse (100) der Druckluftaufbereitungsanlage zu befestigen und/oder um die Trockenmittelpatrone (1) lösbar in einem bestimmten Drehwinkel zum Gehäuse festzulegen.

3. Vorrichtung nach Anspruch 2, **dadurch gekennzeichnet,**
(a) dass zwei Durchgangslöcher (10; 12) am zweiten Abschnitt (19, 49) vorhanden sind; und/oder
(b1) dass das mindestens eine Durchgangsloch als Rundloch (10) ausgeführt ist; oder
(b2) dass das mindestens eine Durchgangsloch als ein nach außen offenes Langloch (12) ausgeführt ist, so dass der zweite Abschnitt (49) unter einem stiftförmigen Befestigungselement (11) eingefädelt werden kann.

4. Vorrichtung nach einem der vorhergehenden Ansprüche, **dadurch gekennzeichnet, dass** am Gehäuse der Druckluftaufbereitungsanlage (100) eine Einstecköffnung und/oder Einstecktasche (101; 102) vorhanden ist, in die der zweite Abschnitt (9; 29; 39; 49) einsteckbar ist.

5. Vorrichtung nach einem der vorhergehenden Ansprüche, **dadurch gekennzeichnet, dass** am zweiten Abschnitt ein mechanischer Schnellverschluss, insbesondere ein Kofferschloss oder Schnappverschluss, angeordnet ist.

6. Vorrichtung nach einem der vorhergehenden Ansprüche, **dadurch gekennzeichnet, dass** zwei Befestigungsbleche vorgesehen sind, die vorzugsweise umfangsseitig diametral am Verbindungsfalz (6) angeordnet sind.

7. Vorrichtung nach Anspruch 6, **dadurch gekennzeichnet,**
(a) dass der zweite Abschnitt (29) eines ersten der beiden Befestigungsbleche mindestens ein Rundloch (10) aufweist und
(b1) dass der zweite Abschnitt (49) des zweiten der beiden Befestigungsbleche mindestens ein nach außen offenes Langloch (12) aufweist oder
(b2) dass am Gehäuse eine Einstecköffnung und/oder Einstecktasche (102) vorhanden ist, in die der zweite Abschnitt des zweiten der beiden Befestigungsbleche in radialer Richtung einsteckbar ist.

8. Vorrichtung nach einem der vorhergehenden Ansprüche, **dadurch gekennzeichnet, dass** die Trockenmittelpatrone kein Gewinde, insbesondere kein am Patronenboden axialmittig angeordnetes Gewinde, aufweist, um die Patrone am Gehäuse der Luftaufbereitungsanlage zu verschrauben.

9. Kraftfahrzeug, insbesondere Nutzfahrzeug, mit einer Vorrichtung nach einem der vorhergehenden Ansprüche.

## Claims

1. Device for the detachable fastening of a drying agent cartridge (1) to a housing (100) of a compressed-air treatment installation of a vehicle, in particular of a utility vehicle, **characterized by**
at least one fastening plate (7), having a first section (8), which is crimped to an end region (4a) of a crimped plate (4) of a cartridge base (2) and to an end region (5a) of a cartridge cover (5) to form a connecting seam (6), and a second section (9; 29; 39; 49), which projects outward from the connecting seam (6).

2. Device according to Claim 1, **characterized in that** the second section (19) of the fastening plate (7) has at least one passage hole (10; 12) through which a pin-like fastening element (11), in particular a screw or a bolt, is guided for the purposes of fastening the drying agent cartridge (1) detachably to the housing (100) of the compressed-air treatment installation and/or for the purposes of fixing the drying agent cartridge (1) detachably at a particular angle of rotation relative to the housing.

3. Device according to Claim 2, **characterized**
(a) in that two passage holes (10; 12) are provided on the second section (19, 49); and/or
(b1) in that the at least one passage hole is in the form of a circular hole (10); or
(b2) in that the at least one passage hole is in the form of an outwardly open elongated hole (12), such that the second section (49) can be threaded in under a pin-like fastening element (11).

4. Device according to one of the preceding claims, **characterized in that**, on the housing of the compressed-air treatment installation (100), there is provided an insertion opening and/or insertion pocket (101; 102) into which the second section (9; 29; 39; 49) can be inserted.

5. Device according to one of the preceding claims, **characterized in that** a mechanical quick-action fastener, in particular a suitcase-type lock or snap-action fastener, is arranged on the second section.

6. Device according to one of the preceding claims, **characterized in that** two fastening plates are provided, which are preferably arranged diametrically oppositely on the circumference of the connecting seam (6).

7. Device according to Claim 6, **characterized**
(a) in that the second section (29) of a first of the two fastening plates has at least one circular hole (10), and
(b1) in that the second section (49) of the second of the two fastening plates has at least one outwardly open elongated hole (12), or
(b2) in that, on the housing, there is provided an insertion opening and/or insertion pocket (102) into which the second section of the second of the two fastening plates can be inserted in a radial direction.

8. Device according to one of the preceding claims, **characterized in that** the drying agent cartridge has no thread, in particular no thread arranged axially centrally on the cartridge base, for the purposes of screwing the cartridge onto the housing of the air treatment installation.

9. Motor vehicle, in particular utility vehicle, having a device according to one of the preceding claims.

## Revendications

1. Dispositif pour la fixation amovible d'une cartouche d'agent dessiccatif (1) sur un boîtier (100) d'une installation de traitement d'air comprimé d'un véhicule, en particulier d'un véhicule utilitaire, **caractérisé par** au moins une tôle de fixation (7) présentant une première portion (8) qui est sertie avec une région d'extrémité (4a) d'une tôle de bordage (4) d'un fond de cartouche (2) et une région d'extrémité (5a) d'un couvercle de cartouche (5) pour former un pli de liaison (6), et une deuxième portion (9 ; 29 ; 39 ; 49) qui fait saillie vers l'extérieur depuis le pli de liaison (6).

2. Dispositif selon la revendication 1, **caractérisé en ce que** la deuxième portion (19) de la tôle de fixation (7) présente au moins un trou traversant (10 ; 12), à travers lequel est guidé un élément de fixation en forme de goupille (11), en particulier une vis ou un boulon, afin de fixer la cartouche d'agent dessiccatif (1) de manière détachable sur le boîtier (100) de l'installation de traitement d'air comprimé et/ou afin de fixer la cartouche d'agent dessiccatif (1) de manière détachable suivant un angle de rotation déterminé par rapport au boîtier.

3. Dispositif selon la revendication 2, **caractérisé en ce que**
(a) deux trous traversants (10 ; 12) sont prévus au niveau de la deuxième portion (19, 49) ; et/ou
(b1) l'au moins un trou traversant est réalisé sous forme de trou rond (10) ; ou
(b2) l'au moins un trou traversant est réalisé sous forme de trou oblong (12) ouvert vers l'extérieur, de telle sorte que la deuxième portion (49) puisse être enfilée en dessous d'un élément de fixation en forme de goupille (11).

4. Dispositif selon l'une quelconque des revendications précédentes, **caractérisé en ce qu'**une ouverture d'enfichage et/ou une cavité d'enfichage (101 ; 102) est prévue au niveau du boîtier de l'installation de traitement d'air comprimé (100), dans laquelle peut être enfichée la deuxième portion (9 ; 29 ; 39 ; 49).

5. Dispositif selon l'une quelconque des revendications précédentes, **caractérisé en ce qu'**une fermeture rapide mécanique, en particulier une serrure de coffre ou une fermeture par encliquetage, est disposée au niveau de la deuxième portion.

6. Dispositif selon l'une quelconque des revendications précédentes, **caractérisé en ce que** deux tôles de fixation sont prévues, lesquelles sont disposées de préférence du côté de la périphérie diamétralement au niveau du pli de liaison (6).

7. Dispositif selon la revendication 6, **caractérisé en ce que**
(a) la deuxième portion (29) d'au moins l'une des deux tôles de fixation présente au moins un trou rond (10) et
(b1) la deuxième portion (49) de la deuxième des deux tôles de fixation présente au moins un trou oblong (12) ouvert vers l'extérieur ou
(b2) une ouverture d'enfichage et/ou une cavité d'enfichage (102) est prévue au niveau du boîtier, dans laquelle peut être enfichée, dans la direction radiale, la deuxième portion de la deuxième des deux tôles de fixation.

8. Dispositif selon l'une quelconque des revendications précédentes, **caractérisé en ce que** la cartouche d'agent dessiccatif ne présente pas de filetage, en particulier pas de filetage disposé axialement centralement sur le fond de la cartouche pour visser la cartouche sur le boîtier de l'installation de traitement d'air.

9. Véhicule automobile, en particulier véhicule utilitaire, comprenant un dispositif selon l'une quelconque des revendications précédentes.
